# EUROPEAN PATENT SPECIFICATION

(11) **EP 0 289 288 B1**
(45) Date of publication and mention of the grant of the patent: **02.02.1994**
(21) Application number: 88303805.1
(22) Date of filing: 27.04.1988
(51) Int. Cl.: G06F 15/02

(54) **Portable computer**
Tragbarer Rechner
Ordinateur portable

(30) Priority: 27.04.1987 JP 104975/87
(43) Date of publication of application: 02.11.1988
(73) Proprietor: SHARP KABUSHIKI KAISHA, Osaka 545 (JP)
(72) Inventor: Yanagiuchi, Shigenobu, Tenri-shi Nara-ken (JP); Takano, Yasuhiko, Nara-shi Nara-ken (JP)
(74) Representative: Brown, Kenneth Richard

(56) References cited:
- EP-A- 0 251 477
- GB-A- 2 040 089
- US-A- 4 507 743
- US-A- 4 636 970
- HEWLETT-PACKARD JOURNAL, vol. 31, no. 3, March 1980, pages 3-11, Palo Alto, US; B.E. MUSCH et al.: "Powerful personal calculator system sets new standards"

## Description

The present invention relates to a portable computer operating with application programs, see for example US Patents 4,507,743 and 4,636,970.

Some conventional portable computers store a plurality of application programs, whose program running-start lines have correspondence with different keys so that a desired program is designated by a key input. In such computers, each program running-start line has a label corresponding to a particular key, enabling a desired program to be run when the key corresponding to the program is depressed.

However, the above conventional portable computer must retrieve the labels in all of the programs each time for searching for the appropriate program running-start line corresponding to a key input. To locate the appropriate program running-start line, therefore, the computer takes a long time which is proportional to the program capacity. This results in a slow processing speed.

Hewlett Packard Journal, Vol. 31, No. 3, March 1980, pages 3-11, Palo Alto, US; B.E. Musch et al.: "Powerful personal calculator system sets new standards" describes the use of local and global labels in order to shorten the search time.

An object of the present invention is to provide a computer of high processing speed.

The invention provides a portable computer capable of storing one or more application programs and of executing a selected program in response to a corresponding key input by retrieving a program running-start line designated for the program by means of said key input, the computer comprising memory means which stores the addresses of program running-start lines of programs executed in the past, decision means for determining whether or not said memory means holds an address of the program running-start line of the program corresponding to a key input, first processing means which executes a selected program by referring to the address of the program running-start line in said memory means when the address is already stored in the memory means, and second processing means for storing the address in the memory means when the decision means determines that the address is not stored in the memory means.

The present invention will become more fully understood from the detailed description given hereinbelow and the accompanying drawings which are given by way of illustration only, and thus are not limitative of the present invention and wherein:
Fig. 1 shows the functional block configuration of an embodiment of the present invention;
Fig. 2 shows the appearance of the embodiment of the present invention;
Fig. 3 shows the hardware construction of the embodiment of the present invention; and
Fig. 4 is a flow chart for explaining the processing sequence of the embodiment of the present invention.

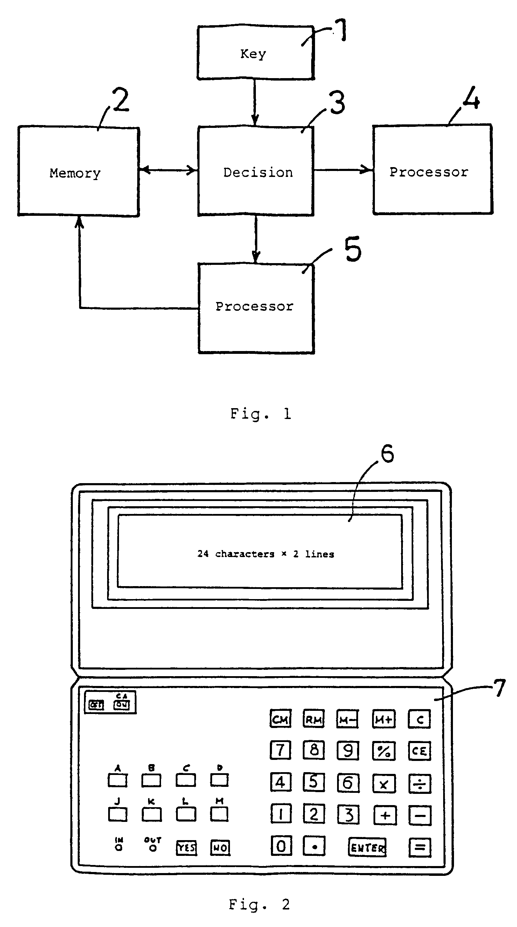

Fig. 1 shows the functional configuration of the portable computer of an embodiment of the present invention. Referring to Fig. 1, 1 is a key input means, 2 is a memory means, 3 is a decision means, and 4 and 5 are processing means.

The key input means 1 designates a program running-start line in an application program written in BASIC language. The memory means 2 stores the address of the program running-start line of the program executed in the past. The decision means 3 judges whether or not the memory means 2 retains the address of the program running-start line corresponding to a key input from the key input means 1. In response to the judgement by the decision means 3, the processing means 4 runs the program from the program running-start line corresponding to the key input. When the decision means 3 judges that the address does not exist in the memory means 2, the processing means 5 stores in the memory means 2 the address of the program running-start line corresponding to the key input.

In the computer of the present invention, in response to a key input from the key input means 1, the decision means 3 judges whether or not the address of the program running-start line corresponding to the key input has been stored in the memory means 2. If yes, the processing means 4 executes the appropriate program from the program running-start line, and if no, the processing means 5 stores the address of the program running-start line in the memory means 2 and simultaneously the processing means 4 executes the appropriate program from the program running-start line.

Fig. 2 shows the appearance of the portable computer of the present invention, which is small enough to be held by a hand when operated, and is foldable in two for convenience in carrying. Referring to Fig. 2, 6 is a liquid crystal display (LCD) and 7 is a keyboard.

On the keyboard 7 are arranged input keys for inputting numerals and other data, operational keys for four rule calculations, and various function keys. Among the function keys, the keys "A", "B", "C", "D", "J", "K", "L" and "M" correspond to the labels "A", "B", "C", "D", "J", "K", "L" and "M" assigned respectively to the program running-start lines in BASIC application programs. A user is required to make application programs in which labels corresponding to the function keys "A", "B", "C", "D", "J", "K", "L" and "M" (hereinafter referred to as definition keys) are allotted to the respective program running-start lines. (Such programs are hereinafter referred to as definition programs.) To execute a certain program, the user depresses the definition key corresponding to the label of the program.

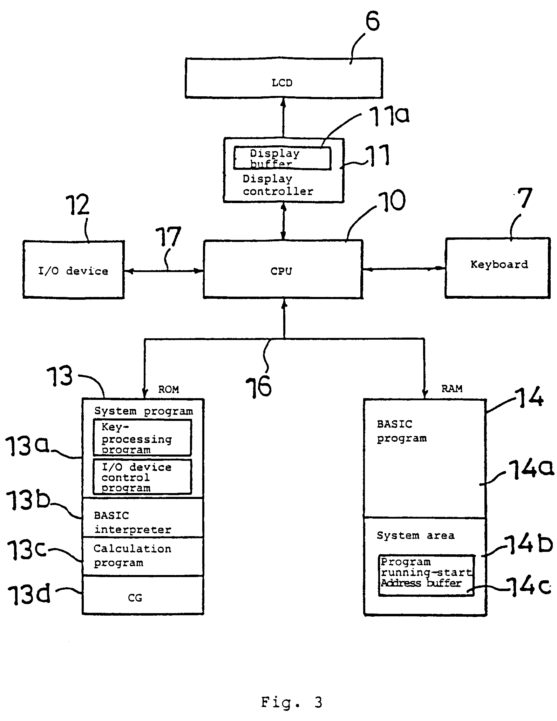

Fig. 3 shows the hardware construction of the portable computer of the present invention. 6 is the LCD, 7 is the keyboard, 10 is a CPU, 11 is a display controller, 12 is an I/O device, 13 is a ROM and 14 is a RAM.

The CPU 10 processes data according to various programs stored in the ROM 13 which is connected via a bus line 16 to the CPU 10. The CPU 10 also activates the decision means 3 and the processing means 4 and 5 shown in Fig. 1 to perform their functions.

The LCD 6 is driven by the display controller 11 which contains a display buffer 11a for storing display data (dot data). The keyboard 7 supplies the CPU 10 with a code signal corresponding to a key input.

The ROM 13 comprises a region 13a for storing a system program comprising a key-processing program and I/O device control programs, a region 13b for storing a BASIC language interpreter, a region 13c for storing a calculation program which realises the function of a desk top calculator, and a region 13d assigned for a character pattern generator (abbreviated as CG) which develops a dot pattern from the code data of characters supplied by the CPU 10 to output to, say, the display in this embodiment.

Like the ROM 13, the RAM 14 is also connected via the bus line 16 to the CPU 10. The RAM 14 comprises a region 14a for storing application programs written in BASIC as desired by the user, and a region 14b for various buffers and counters. The system region 14b includes a program running-start address buffer 14c for storing program running-start line addresses which will be described later.

The I/O device 12 is connected via a bus line 17 to the CPU 10. The I/O device 12 contains external device-connecting terminals for data communication with external devices (such as a printer and a magnetic disc device) connected to the terminals according to the I/O device control programs stored in the ROM 13.

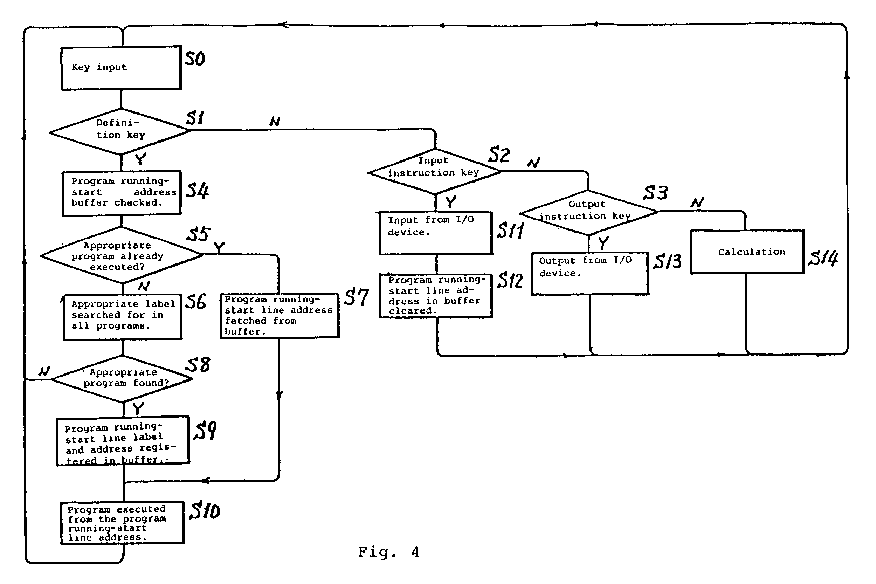

Fig. 4 is a flow chart showing the processing sequence of the portable computer of the present invention. The procedure of designating a program running-start line of a program by a key input for execution of the program is described below with reference to the flow chart.

When a certain key is depressed (step S0), the key processing program determines whether or not the key is a definition key (S1). If no, the program determines whether or not the key is an I/O instruction key (S2 and S3). If the key is an I/O instruction key, the key input is processed according to an I/O device control program (S11 and S12 or S13). Otherwise, the key input is processed according to the calculation program (S14).

If the key depressed is judged as a definition key in the step S1, the presence or absence of the program corresponding to the key input is checked in the steps S4 through S6 in the following method. The content of the program running-start address buffer 14c is checked first (S4). This buffer 14c stores the labels and addresses of the program running-start lines in the programs executed in the past. It is checked whether or not the buffer 14c contains the data of the label and address of the program running-start line corresponding to the definition key input (S5). If yes, the CPU judges that the corresponding data has been executed in the past, fetching the program running-start address data (S7) to start running the program from the fetched address (S10).

If the program running-start address buffer 14c does not contain the program running-start address data corresponding to the definition key input, the CPU judges that the program has never been executed and searches for the program having the label corresponding to the definition key in all the application programs stored in the RAM 14 (S6). When the appropriate program is not found, the CPU waits for a next key input. When the appropriate program is found, the label and address of the program running-start line are stored in the program running-start address buffer 14c (S9) so that the program can be executed in the future only by depressing the appropriate definition key. Finally the program is executed (S10). When the same definition key is depressed in the future, the CPU surveys the program running-start address buffer 14c and retrieves the label and program running-start line address corresponding to the definition key to execute the program from the program running-start line.

The data of the labels and addresses of the program running-start lines registered are cleared (S12) when a program is input through the I/O device 12 by depressing the input instruction key (S11).

According to the present invention, as mentioned above, a program running-start line in a program is retrieved in response to a key input. When the appropriate program running-start line address is found, it is stored in the memory, enabling the computer to execute the program in the future in response to the appropriate key input by referring to the address stored in the memory without looking for the program in the entire application programs. This reduces the program retrieval task substantially, thus increasing the processing speed.

## Claims

1. A portable computer capable of storing one or more application programs and of executing a selected program in response to a corresponding key input by retrieving a program running-start line designated for the program by means of said key input, the computer comprising memory means (2) which stores the addresses of program running-start lines of programs executed in the past, decision means (3) for determining whether or not said memory means holds an address of the program running-start line of the program corresponding to a key input, first processing means (4) which executes a selected program by referring to the address of the program running-start line in said memory means when the address is already stored in the memory means, and second processing means (5) for storing the address in the memory means when the decision means determines that the address is not stored in the memory means.

2. A portable computer according to claim 1, wherein, when the decision means (3) determines that a required address is not stored in the memory means (2), the first processing means (4) executes the selected program simultaneously with the storage of the address in the memory means (2) by the second processing means (5).

3. A portable computer according to claim 1 or claim 2, wherein said memory means (14c) constitutes a portion of a RAM (14) in which said one or more application programs are stored.

## Patentansprüche

1. Tragbarer Rechner, mit Speicher für wenigstens ein Anwenderprogramm, bei dem durch Betätigung einer zugehörigen Taste ein ausgewähltes Programm durch Suchen einer Programmlauf-Startzeile anlauft,
die für das Programm durch die Tasteneingabe spezifiziert wurde, welcher Rechner folgendes aufweist: eine Speichereinrichtung (2), die die Adressen von Programmlauf-Startzeilen von Programmen speichert, die in der Vergangenheit ausgeführt wurden; eine Entscheidungseinrichtung (3) zum Ermitteln, ob die Speichereinrichtung eine Adresse für die Programmlauf-Startzeile des einer Tasteneingabe entsprechenden Programms enthält oder nicht; eine erste Verarbeitungseinrichtung (4), die ein ausgewähltes Programm dadurch ausführt, daß sie auf die Adresse für die Programmlauf-Startzeile in der Speichereinrichtung Bezug nimmt, wenn die Adresse bereits in der Speichereinrichtung abgespeichert ist; und eine zweite Verarbeitungseinrichtung (5) zum Abspeichern der Adresse in der Speichereinrichtung, wenn die Entscheidungseinrichtung ermittelt, daß die Adresse nicht in der Speichereinrichtung abgespeichert ist.

2. Tragbarer Rechner nach Anspruch 1, bei dem die erste Verarbeitungseinrichtung (4) dann, wenn die Entscheidungseinrichtung (3) ermittelt, daß eine erforderliche Adresse in der Speichereinrichtung (2) nicht abgespeichert ist, das ausgewählte Programm gleichzeitig mit einem Abspeichern der Adresse in der Speichereinrichtung (2) durch die zweite Verarbeitungseinrichtung (5) ausführt.

3. Tragbarer Rechner nach Anspruch 1 oder Anspruch 2, bei dem die Speichereinrichtung (14c) einen Teil eines RAM (14) bildet, in dem das eine Anwenderprogramm abgespeichert ist oder die mehreren abgespeichert sind.

## Revendications

1. Ordinateur portable capable d'emmagasiner un ou plusieurs programmes d'application et d'exécuter un programme sélectionné en réponse à une entrée par clavier correspondante, par extraction d'une ligne de début d'exécution de programme désignée pour le programme au moyen de ladite entrée par clavier, l'ordinateur comprenant des moyens formant mémoire (2) qui emmagasinent les adresses de lignes de début d'exécution de programme correspondant à des programmes exécutés antérieurement, des moyens de décision (3) pour déterminer si ou non lesdits moyens formant mémoire contiennent une adresse de la ligne de début d'exécution de programme pour le programme correspondant à une entrée par clavier, des premiers moyens de traitement (4) qui exécutent un programme sélectionné en se référant à l'adresse de la ligne de début d'exécution de programme contenue dans lesdits moyens formant mémoire lorsque l'adresse est déjà emmagasinée dans les moyens formant mémoire, et des seconds moyens de traitement (5) pour emmagasiner l'adresse dans les moyens formant mémoire lorsque les moyens de décision déterminent que l'adresse n'est pas emmagasinée dans les moyens formant mémoire.

2. Ordinateur portable selon la revendication 1, dans lequel, lorsque les moyens de décision (3) déterminent qu'une adresse requise n'est pas emmagasinée dans les moyens formant mémoire (2), les premiers moyens de traitement (4) exécutent le programme sélectionné simultanément avec l'emmagasinage de l'adresse dans les moyens formant mémoire (2) par les seconds moyens de traitement (5).

3. Ordinateur portable selon la revendication 1 ou la revendication 2, dans lequel lesdits moyens formant mémoire (14c) constituent une partie d'une mémoire RAM (14) dans laquelle sont emmagasinés ledit ou lesdits programmes d'application.
